# EUROPÄISCHE PATENTSCHRIFT

(11) **EP 0 680 799 B1**
(45) Veröffentlichungstag und Bekanntmachung des Hinweises auf die Patenterteilung: **17.06.1998**
(21) Anmeldenummer: 95106059.9
(22) Anmeldetag: 22.04.1995
(51) Int. Cl.: B23B 31/26, B23B 31/00, B23B 29/04

(54) **Aufnahme- und Spannvorrichtung, insbesondere für Mess- und Einstellgeräte**
Holding and clamping device, especially for measuring and positioning devices
Dispositif de fixation et serrage, notamment pour dispositifs de mesure et réglage

(30) Priorität: 03.05.1994 DE 4415466
(43) Veröffentlichungstag der Anmeldung: 08.11.1995
(73) Patentinhaber: KELCH GMBH + CO., D-73614 Schorndorf (DE)
(72) Erfinder: Kelch, Dieter, D 73614 Schorndorf (DE)
(74) Vertreter: Patentanwälte Ruff, Beier, Schöndorf und Mütschele

(56) Entgegenhaltungen:
- EP-A- 0 169 543
- EP-A- 0 292 022
- EP-A- 0 471 197
- EP-A- 0 539 961
- EP-A- 0 642 860
- WO-A-90/11862
- CH-A- 437 965
- DE-U- 9 007 396
- GB-A- 2 171 037
- US-A- 4 632 613
- US-A- 4 778 313

## Beschreibung

Die Erfindung betrifft eine Aufnahme- und Spannvorrichtung, insbesondere für Meß- und Einstellgeräte für Maschinenwerkzeuge.

Maschinenwerkzeuge, wie Fräser, Bohrer oder dgl., werden in den Arbeitsspindeln von Werkzeugmaschinen über Steilkegel, aber auch zylindrische Aufnahmen oder dgl., aufgenommen, die in die an der Spindel vorgesehene Werkzeugaufnahme über die verschiedenartigsten Spannelemente eingespannt werden. Dies sind Gewinde, am Ende von Steilkegeln vorgesehene Stangen mit kopfartigen Verdickungen, Einstiche in der Stange oder dgl.. An diesen Spannelementen greifen entsprechend ausgebildete Spannmittel der Werkzeugmaschine an und spannen die Werkzeuge in der Spindel fest. Für die Art der Spannelemente hat fast jeder Werkzeugmaschinenhersteller ein eigenes System entwickelt, so daS auf der jeweiligen Maschine immer Werkzeuge mit dem gleichen Typ von Spannelementen verwendt werden müssen.

Derartige Maschinenwerkzeuge werden, insbesondere zur Verwendung auf NC-Maschinen, auf Präzisions-Meßmaschinen voreingestellt, vermessen bzw. nachvermessen. Zu dieser Einstellung der Werkzeugschneiden in ihrer genauen Position und Lage zur Werkzeugachse und in axialer Richtung ist es notwendig, daß die Werkzeuge in einer Werkzeugaufnahme an einer Spindel aufgenommen werden, die zum Meßgerät gehört und die die gleichen Voraussetzungen bietet wie die Maschinenspindel. Da solche Meßmaschinen zur Einstellung der Werkzeuge verschiedener Werkzeugmaschinen bei Bearbeitungszentren vorgesehen sind, ist es bisher notwendig, für jeden Spannelemententyp einen besonderen Adapter in die Spindel einzusetzen, um eine den Arbeitsbedingungen entsprechende Spannung vorzunehmen. Dies erforderte nicht nur Mehrarbeit, sondern auch das Vorhandensein von Adaptern für jeden Typ.

Aus der CH-PS 437 965 ist eine Spannvorrichtung gemäß dem Oberbegriff des Anspruchs 1 für ein Steilkegelwerkzeug bekannt geworden, das nach Art einer Zange arbeitet, die unter Federkraft geschlossen wird. Zum Lösen wird diese Zange gegenüber dem Werkzeug entgegen der Spannrichtung bewegt, so daß die Zangenbacken auf einen Konus am Werkzeug auflaufen und damit die Spannung gelöst wird. Ein in das Spannwerkzeug eingesetzter Konus hält die Spannbacken danach geöffnet. Dieses Spannwerkzeug ist für ein spezielles Werkzeug vorgesehen und daher nicht universell für zahlreiche Werkzeuge einsetzbar.

Aus der DE-U-90 07 396 ist eine Werkzeugmaschine mit einer Spannvorrichtung bekannt geworden, in der einseitig abgeschrägte, senkrecht zur Werkzeugachse bewegliche Spannbolzen den Kopf eines Steilkegelwerkzeuges angreifen. Die Spannbolzen sind in ihrer Spannstellung durch eine darüber geschobene, abgestufte Hülse blockiert.

Aufgabe der Erfindung ist es, eine Aufnahme- und Spannvorrichtung zu schaffen, die die Einspannung von Werkzeugen mit verschiedenartigen Typen und Formen von Spannelementen ermöglicht.

Diese Aufgabe wird erfindungsgemäß durch den Anspruch 1 gelöst.

Die Universalspannmittel, die vorgesehen sind, sind aufgrund ihrer zweifachen Bewegungsmöglichkeit so ausgebildet, daß sie bei der in Axialrichtung vorgenommenen Spannbewegung sich in Richtung auf die Werkzeugachse zu bewegen, dort an einer Außenfläche des Spannelementes anschlagen und daran so weit in Axialrichtung entlang gleiten, bis die Spannung vorgenommen ist.

Vorzugsweise weisen die Spannmittel Angriffsflächen oder -kanten auf, die beim Spannen an in Spannrichtung ansteigenden Spannflächen des Spannelementes angreifen, beispielsweise an der vorderen Fläche eines Kopf eines bolzenartigen Spannelementes. Diese Angriffsflächen sind im wesentlichen radial gerichtet und schließen sich an Gleitflächen der Spannmittel an, die die Spannmittel an nicht in Spannrichtung ansteigenden Flächen des Werkzeugs bzw. seines Spannelementes entlanggleitend führen.

Obwohl man die Angriffsflächen im wesentlichen radial gerichtet ausbilden sollte, um auch an radial gerichteten Spannflächen eine Anlage zu haben, wird in den meisten Fällen von der Angriffsfläche nur die achsnächste Kante an dem Spannelement angreifen, und zwar an der Stelle, wo der Anstieg, d.h. die Verdickung beginnt. Dadurch ist es gleichgültig, welche Neigung die Spannfläche des Spannelementes am Werkzeug hat.

Es könnte sich auch um einen sehr flachen Anstieg handeln. Dagegen gleitet das Spannelement über alle anderen Flächen, auch wenn sie profiliert sind, hinweg, solange sich kein Hinterschnitt findet, an dem es sicher angreifen kann.

Die Spannmittel sind zu ihrer Radialbewegung unabhängig von der Axialbewegung angetrieben, beispielsweise durch eine Federkraft. Es ist aber auch möglich, sie aktiv anzutreiben oder ihre Bewegung unmittelbar von der Axialbewegung abzuleiten, solange ein gewisses Maß an Unabhängig der Bewegung aufrechterhalten wird, wodurch die Angriffsfläche bzw. -kante des Spannmittels die Form des Spannelementes nachfahren, d.h. "kopieren" kann.

Die Spannmittel können vorzugsweise unter einem Winkel zwischen 30 und 60°, vorzugsweise 45°, zur Achsrichtung bewegbar geführt sein, und zwar in Spannrichtung sich von der Achse entfernend. Durch diese Schrägführung ist einerseits sichergestellt, daß die Spannmittel am Spannelement entlanglaufen können, ohne sich dort festzufressen, solange sie nicht auf eine ansteigende Spannfläche stoßen. Andererseits wird dadurch bei der Rückstellung in die entspannte Stellung dafür gesorgt, daS die Spannmittel auch entgegen einer Federkraft wieder in ihre radial äußere Ausgangslage zurücklaufen, und ferner wird vermieden, daß beim Auftreffen der Spannmittel auf eine schräge Spannfläche die Spannmittel radial nach außen gedrückt werden und sich unerwünscht öffnen. Solang die Schräge der Spannmittelführung kleiner oder gleich der Schräge der Spannflächen am Werkzeug ist, entsteht dabei nicht einmal eine Kraftkomponente, die die Spannmittel in Öffnungsrichtung belasten könnte.

Um einen möglichst gleichmäßigen Angriff an den Spannelementen des Werkzeugs zu erreichen, sind vorzugsweise drei unabhängig oder ggf. auch synchronisiert bewegbare Spannmittel am Umfang vorgesehen, die einen gemeinsamen Spannmittelsatz bilden. Sie sind im wesentlichen an einer radialen Ebene angeordnet. Mit dieser Einrichtung sind Spannelemente unterschiedlichster Form und auch in einem sehr großen Längenbereich zu erfassen. Um jedoch den Hub des die Spannmittel enthaltenen Körpers nicht zu groß werden zu lassen, kann im Abstand von dem ersten Spannmittelsatz ein zweiter entsprechend ausgebildeter Spannmittelsatz angeordnet sein. Dieser arbeitet stets in der gleichen Weise. Wenn er jedoch auf kein Spannelement trifft, so arbeitet er, ohne daß es die Funktion beeinträchtigt, leer, indem er kein Spannelement fasst.

Die Spannmittel können in schrägen Bohrungen eines Spannkörpers geführte runde Bolzen sein, die an einem Ende die Angriffs- und Gleitflächen in Form eines radial nach innen vorspringenden, ggf. zur Anpassung an die Spannelementrundung innen gerundeten Vorsprunges aufweisen. Im Bereich dieser Endfläche kann eine radiale, d.h. zur Bolzenachse schräge Stützfläche vorgesehen sein, die mit dem Vorrichtungskörper zusammenarbeitet, um den Bolzen in der entspannten Stellung entgegen der Federkraft in seiner radial nach außen gedrückten Stellung zu halten.

Der Spannkörper kann mit verschiedenen Antrieben axial bewegt werden, vorzugsweise pneumatisch. Es sind auch hydraulische, elektromechanische oder manuelle Antriebe möglich.

Wenn Werkzeuge, insbesondere sehr kleine Werkzeuge, Spannelemente haben, die nicht bis in den Bereich eines Spannmittels reichen, so können mit einem einzigen Universal-Spannadapter auch solche Werkzeuge gespannt werden, wobei es wiederum keine Rolle spielt, von welchem Typ diese Spannelemente sind. Dieser Spannadapter, der aus einer geschlitzten Hülse mit Spannbacken an einem Ende besteht, wird, ggf. mit einem entsprechenden Aufnahmedapter mit einer kleineren Werkzeugaufnahme, so in die Werkzeugaufnahme der Vorrichtung eingesetzt, daß die Spannmittel an seiner Außenfläche angreifen und, wenn sie die entsprechende Spannfläche des Adapters, z.B. im Bereich einer ringförmigen Nut, erreichen, den Spannadapter in Spannrichtung axial anspannen, wobei gleichzeitig auch die Spannbacken durch die entstehende radial nach innen gerichtete Kraft geschlossen werden. Wenn die Spannelemente nicht an dem Spannadapter anliegen, so können die Spannbacken durch die Federwirkung der geschlitzten Hülse nach außen nachgeben und so das Einführen des Kopfes eines Spannelementes ermöglichen. Auch hier ist man wieder von der Länge weitgehend unabhängig, weil ein entsprechender Spannelementensatz solange an dem Spannadapter entlang läuft, bis er eine entsprechende Spannfläche gefunden hat.

Wenn die Vorrichtung auf einem Meßgerät angebracht ist, so ist sie meist als drehbare Spindel ausgebildet, die es ermöglicht, zur Einstellung und Messung die unterschiedlichsten Winkelpositionen anzufahren. Die Vorrichtung ist ganz besonders für Meß- und Einstellgeräte geeignet, weil dort die Universalität in Bezug auf die unterschiedlichen Typen von Spannelemente besonders zum Tragen kommt und die Werkzeuge in einer Meßeinrichtung nicht großen Bearbeitungskräften ausgesetzt sind, wodurch sich der Bau der Universaleinspannvorrichtung vereinfacht. Bei entsprechender Ausbildung ist es jedoch auch möglich, die Aufnahme- und Spannvorrichtung z.B. in einer Arbeitsspindel einer Werkzeugmaschine vorzusehen, die es dann ermöglicht, Werkzeuge unterschiedlichster Typen aufzunehmen.

An der Vorrichtung können ferner Spanneinrichtungen für weitere Spannmöglichkeiten vorgesehen sein. Die Erfindung ist vorzugsweise für Spannelemente mit einem zentralen, bolzen- oder rohrartigen Spannelement mit irgendeinem Hinterschnitt vorgesehen. Für Werkzeuge mit Frontspannung, wobei klauenartige Spannbacken das Werkzeug von außen in eine Aufnahme hineindrücken, können derartige Spannbacken zusätzlich vorgesehen sein. Ferner ist zur genauen Winkeleinstellung eine Umfangs-Indexiervorrichtung und/oder eine Bremse vorgesehen, die vorteilhaft mit dem gleichen Antriebsmedium wie die Spannmittel betreibbar sind, z.B. pneumatisch. In diesem Falle kann dann am Ende der Vorrichtung ein Rotierübertrager vorgesehen sein, der die einzelnen Druckluftkanäle auf die drehbare Spindel überträgt.

Diese und weitere Merkmale gehen außer aus den Ansprüchen auch aus der Beschreibung und den Zeichnungen hervor, wobei die einzelnen Merkmale jeweils für sich allein oder zu mehreren in Form von Unterkombinationen bei einer Ausführungsform der Erfindung und auf anderen Gebieten verwirklicht sein und vorteilhafte sowie für sich schutzfähige Ausführungen darstellen können, für die hier Schutz beansprucht wird. Ein Ausführungsbeispiel der Erfindung ist in den Zeichnungen dargestellt und wird im folgenden näher erläutert. In den Zeichnungen zeigen:
- Fig. 1: einen Längsschnitt durch eine Aufnahme- und Spannvorrichtung,
- Fig. 2: eine teilgeschnittene Frontansicht davon,
- Fig. 3: einen Teil-Längsschnitt mit einem Aufnahme- und Spannadapter und
- Fig. 4: eine schematische Darstellung des Spannvorganges.

Die Zeichnungen zeigen eine Aufnahme- und Spannvorrichtung 11, die auch als Spindelstock bezeichnet werden kann. Sie ist Teil eines Meß- und Einstellgerätes 12, auf dessen einer Referenzfläche sie montiert ist. Sie weist einen Vorrichtungskörper 13 auf, der eine horizontale Öffnung 14 hat. An ihm ist über Präzisionswälzlager 15 ein Werkzeugaufnahmeteil 16 um eine horizontale Achse 17 drehbar gelagert. Das Werkzeugaufnahmeteil 16 enthält eine Werkzeugaufnahme 18, die als Norm-Steilkegel-Aufnahmefläche ausgebildet ist. An ihrer Frontseite 19 sind pneumatisch betätigbare Spannbacken 20 angeordnet, die über in das Werkzeugaufnahmeteil 16 integrierte Pneumatikzylinder 26 betätigbar sind, und ein Werkzeug mit einem äußeren Spannflansch gegen die Frontfläche ziehen können. Dabei greift ein Mitnehmer 21 in eine Nut des Spannflansches ein.

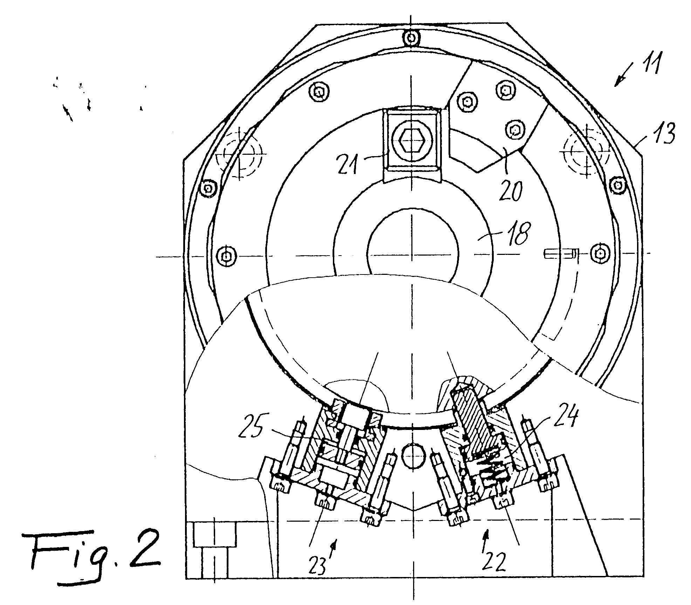

Fig. 2 zeigt eine Indexiereinrichtung 22 und eine Bremse 23, die beide wie der Pneumatikzylinder 24, 25 betätigbar sind. Sie dienen dazu, das drehbar gelagerte Werkzeug-Aufnahmeteil zur Vornahme einer Einstell- oder Meßoperation festzusetzen bzw. in Umfangsrichtung genau zu positionieren.

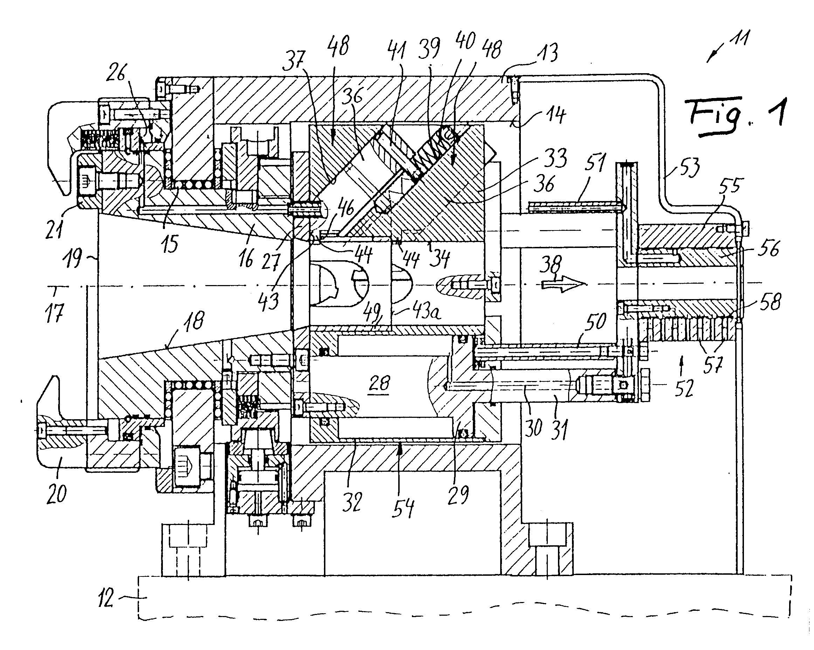

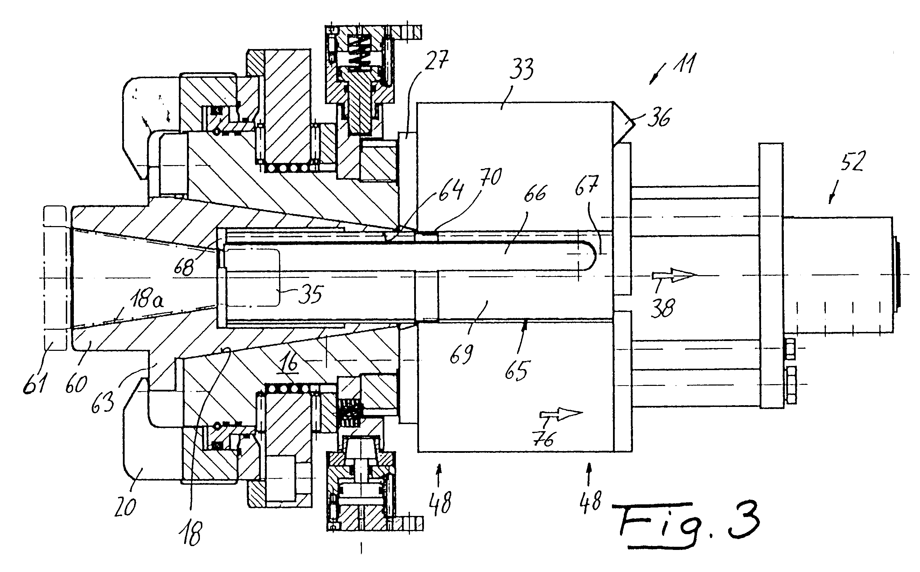

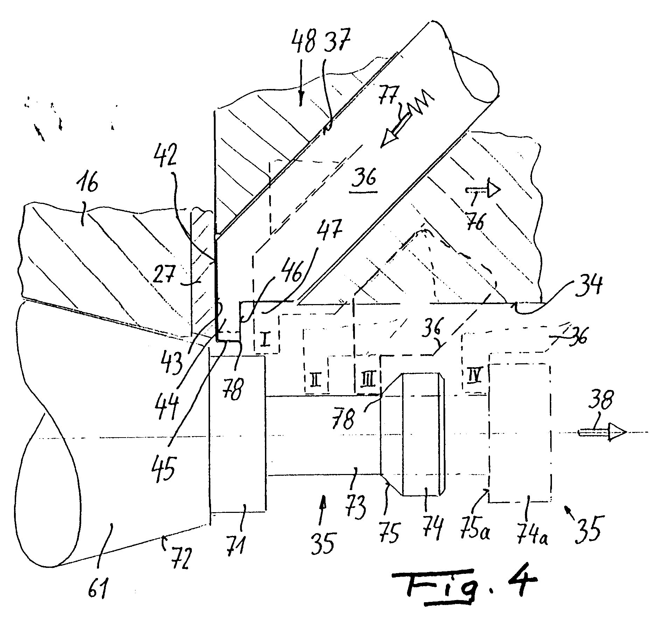

Wie Fig. 1 zeigt, ist an dem Werkzeugaufnahmeteil 16 auf der der Frontseite 19 gegenüberliegenden Seite eine Stützplatte 27 befestigt, an der drei Kolbenstangen 28 eines Pneumatickolbens 29 befestigt sind. Von diesem ragt eine einen Pneumatikzuleitungskanal 30 enthaltene Kolbenstangenverlängerung 31 zur Rückseite der Vorrichtung 11. Die insgesamt drei zugehörigen Pneumatikzylinder 32 sind in einem Spannkörper 33 vorgesehen, der zur Achse 17 koaxial angeordnet und längs dieser durch den Antrieb 54 bewegbar ist, der durch Kolben 29 und Zylinder 32 gebildet ist. Der Spannkörper 33 enthält eine Mittelbohrung 34, deren Durchmesser so groß ist, daß die üblichen Spannelemente 35 eines Werkzeugs (s. Fig. 3 und 4) dort hineinragen können.

In dem Spannkörper 33 sind, über den Umfang regelmäßig verteilt und jeweils zwischen den Pneumatikzylindern 33, schräge Führungen 37 für Spannmittel 36 vorgesehen. Die Spannmittel sind Bolzen von kreisrundem Querschnitt und die Führungen entsprechende Bohrungen, die unter einem Winkel von 45° (der jedoch, abhängig von den Bedingungen, auch größer oder kleiner sein könnte, auch beispielsweise zwischen 30 und 60°) in den Spannkörper gebohrt sind, und zwar derart, daß in Spannrichtung 38 nach außen auseinanderlaufen.

Parallel zu den Führungen 37 sind jeweils Bohrungen 39 vorgesehen, die über eine Verbindungsnut mit den Führungen in Verbindung stehen. In jeder Bohrung 39 ist eine Druckfeder 40 angeordnet, die über einen Stift 41 das zugehörige Spannmittel 36 entgegen der Spannrichtung und schräg nach innen drückt. Es liegt dabei mit einer schrägen Endfläche 42 (Fig. 4) an der Stützfläche 43 der Stützplatte 27 an. Im Bereich der Stützfläche 42 ragt ein Vorsprung 44 des Spannmittels 36 nach innen, der an seiner Unterseite eine Gleitfläche 45 und an seiner in Spannrichtung weisenden Fläche eine Angriffsfläche 46 aufweist. Die Gleitfläche 45 kann konkav gerundet sein, so daß sie sich einem mittleren Durchmesser der Spannelemente 35 anpaßt. Die andere Fläche 46 ist radial und durch eine entsprechende, von der Seite gesehen dreieckige Ausnehmung 47 aus dem bolzenförmigen Spannmittel 36 herausgearbeitet.

Jeweils drei Spannmittel, von denen in den Figuren 1 und 4 jeweils nur eines dargestellt ist und die gleichmäßig über den Umfang verteilt sind, bilden einen Spannmittelsatz 48. Er könnte auch aus mehr oder weniger einzelnen Spannmitteln bestehen, je nach Größe der Vorrichtung.

In axialem Abstand dahinter ist, in Fig. 1 mit schwachen strichlierten Linien angedeutet, ein zweiter Spannmittelsatz 48 vorgesehen, der gleich ausgebildet ist, wie der vorher beschriebene. Statt an der Spannplatte 27 stützt sich die zugehörige Endfläche des Spannmittels 36 an einer Stützfläche 43a ab, die eine Endfläche einer in die Bohrung 34 eingesetzten Hülse 49 bildet.

Die Kolbenstangenverlängerungen 31 und weitere Pneumatikzuleitungen 50, 51 zu den Antrieben 54 bzw. den Pneumatikzylindern 24, 25, 26 bilden einen den Spannkörper 33 teilweise durchdringenden, jedoch zusammen mit der Spindel, d.h. dem Werkzeugaufnahmeteil 16 und dem Spannkörper 33 drehbaren Käfig, der zu einem Pneumatik-Rotierübertrager 52 führt, der aus einer am Vorrichtungsgehäuse 53 festen Hülse 55 und einer sich mit der Spindel drehenden Innenhülse 56 besteht. Diesem sind, jeweils gegeneinander abgedichtet, Pneumatikzuleitungen 57 bzw. Ringkanäle 58 zugeordnet, die miteinander in Verbindung stehen. Über die Zuleitungen können die Pneumatikzylinder zur Ausführung der unterschiedlichen Funktionen gesteuert und betätigt werden.

Fig. 3 zeigt, unter Weglassung des Vorrichtungskörpers 13 und des Gehäuses 53, die Vorrichtung gemäß Fig. 1. In die Werkzeugaufnahme 18 ist jedoch ein außen mit einem Steilkegel der im Werkzeugaufnahmeteil 16 vorgesehenen Größe versehener Aufnahmedapter 60 eingesetzt, der seinerseits eine Werkzeugaufnahme 18a hat, in die ein Werkzeug 61 mit einem kleineren Steilkegel einsetzbar ist (strichpunktiert angedeutet). Der Aufnahmeadapter 60 ist über einen Außenflansch 63 mittels der Spannbacken 20 in der Werkzeugaufnahme 18 festgespannt.

Im Aufnahmeadapter 60 befindet sich, anschließend an die Werkzeugaufnahme 18a, eine zentrische Bohrung 64, in die ein Spannadapter 65 einsetzbar ist. Dieser besteht aus einer relativ dünnwandigen Hülse, die drei fast über ihre ganze Länge gehende Längsschlitze 66 aufweist. Lediglich am werkzeugfernen Ende ist die Hülse durch die Schlitze überbrückende Stege 67 und ggf. einen inneren Steg oder Boden in Umfangsrichtung geschlossen.

Am der Werkzeugaufnahme 18a zugewandten Ende weist der Spannadapter Spannbacken 68 auf, die aus radial nach innen vorstehenden Vorsprüngen bestehen, die dazu geeignet sind, hinter Angriffsflächen an Spannelementen 35 zu greifen. Sie sind ähnlich ausgebildet wird die Vorsprünge 44 der Spannmittel.

Etwa mittig weisen die einzelnen, durch die Schlitze 66 voneinander getrennten Stege 69 des Spannadapters eine in Umfangsrichtung verlaufende Ringvertiefung 70 auf, in die die Spannmittel 36 mit ihren Vorsprüngen 44 eingreifen können.

Der Spannadapter besteht aus relativ gut federndem Stahl, so daß die Stege 69 auch nach einer vorherigen Zusammendrückung ihre ursprüngliche Lage wieder einnehmen und dabei dem Spannadapter eine etwa zylindrische Form geben, in der er sich in der Bohrung 64 festklemmt.

Die Aufnahme- und Spannvorrichtung arbeitet nach folgendem Verfahren:

Zur Aufnahme eines Werkzeuges 61 in der Werkzeugaufnahme 18 (Fig. 4) wird dieses in die Steilkegelaufnahme hineingesteckt. Das Werkzeug enthält an seinem Ende beim in Fig. 4 in ausgezogenen Linien dargestellten Fall ein Spannelement 35, das an einen Bund 71 am Steilkegel 72 anschließt. Daran schließt sich ein Schaft 73 und ein Kopf 74 des Spannelementes 35 an. Zwischen Schaft und Kopf ist eine konische Angriffsfläche 75 ausgebildet.

Dieses Spannelement 35 ist nur als ein Beispiel von vielen Spannelementen gezeigt, die mit der Vorrichtung gespannt werden können. Ein alternatives Beispiel ist in Fig. 4 in strichpunktierten Linien dargestellt. Dort schließt sich an den Schaft 73 ein zylindrischer Kopf 74a mit radialer Angriffsfläche 75a an. Außerdem ist dieses Spannelement wesentlich länger.

In der in Fig. 1 und 4 dargestellten entspannten Lage befindet sich der Spannkörper 33 in seiner in den Zeichnungen linken Position, d.h. in Anlage an der Stützfläche 43. Diese drückt die bolzenförmigen Spannmittel 36 in ihre äußere Lage, in der sie weitgehend innerhalb der Führungsbohrungen 37 liegen und ihr Vorsprung 44 aus der Bahn der Spannelemente 35 zurückgezogen ist, so daß diese beim Einsetzen des Werkzeugs in die Bohrung 34 hineinlaufen können.

Wenn jetzt zur Spannung des Werkzeuges der Antrieb 54 betätigt, d.h. durch die Pneumatikleitungen 50 Druckluft in den Pneumatikzylinder 32 geleitet wird, so macht der Spannkörper 33 eine Axialbewegung (Pfeil 76) in Spannrichtung 38. Dabei gleitet die Endfläche 42 der Spannmittel 36 an der Stützfläche 43 nach innen, und die bolzenförmigen Spannmittel 36 können sich unter ihrer Federbelastung in Richtung ihrer Führungen 37, d.h. in Richtung des Pfeiles 77, schräg nach innen bewegen. Dabei kommt zuerst der Vorsprung 44 mit einer inneren Gleitfläche 45 mit dem Bund 71 in Kontakt, der die weitere Bewegung des Spannmittels nach innen begrenzt (strichlierte Zwischenposition I in Fig. 4). Am Ende des Bundes wird das Spannmittel wieder freigegeben und kann weiter nach innen, d.h. schräg in Richtung auf das Werkzeug zu laufen, "rutscht" also am Ende des Bundes herunter bis auf den Schaft 73, an dem es entlanggleitet (Position II in Fig. 4).

Schließlich erreicht der Vorsprung 44 die Spannfläche 75 des Spannelementes (Position III). Dies ist die erste nach außen ansteigende Fläche in Spannrichtung 38, auf die der Vorsprung 44 stößt. Dieser kann das Spannelement nicht folgen, weil durch die Schräge der Führung 37 und ggf. eine gewisse Selbstsperrwirkung des Spannmittels in der Führung eine Bewegung nach außen nicht möglich ist. Trotz der Konizität der Spannfläche 75 läuft also das Spannmittel 36 nicht wieder nach außen, sondern greift an der Spannfläche 75 mit seiner Angriffsfläche, im vorliegenden Fall mit der unteren Angriffskante 78, an der unteren Wurzel der Spannfläche 75 an und spannt nunmehr bei der weiteren Bewegung des Spannkörpers 33 in Richtung 76 das Werkzeug fest und mit vorgegebener Spannkraft in seine Aufnahme 18.

Es ist zu erkennen, daß dieser Funktionsablauf von der Art und Ausbildung der Spannelemente selbst unabhängig ist. Dies ist anhand der strichpunktiert gezeichneten Ausbildung des Spannelementes 35 gezeigt. In diesem Falle würde das Spannmittel 36 weiter auf dem Schaft 35 laufen, bis es die Spannfläche 75a des Kopfes 74a erreicht. In diesem Falle würde eine flächige Anlage an der radialen Spannfläche 75a erfolgen (Position IV in Fig. 4).

Im vorliegenden Beispiel ist die Funktion nur eines Spannmittelsatzes 48 gezeigt. Der in axialem Abstand rechts davon liegende zweite Spannmittelsatz arbeitet in der gleichen Weise und ist für noch längere Spannelemente vorgesehen. Wenn also die Angriffskante 78 des zweiten Spannmittelsatzes bei ihrer Bewegung an der Hülsenkante 43a nach innen eine Spannfläche 75, 75a eher erreicht als die des ersten Spannmittelsatzes, so wird die Spannung durch den zweiten Spannmittelsatz vorgenommen. Im anderen Falle würden sich die Spannmittel 36 schließen, d.h. soweit zusammenlaufen, wie es die Führung 37 ermöglicht (s. den dünngezeichneten Stift 41 in Fig. 1, der die innere Begrenzungsposition zeigt), ohne ein Spannelement zu fassen.

Wenn, wie in Fig. 3, ein Aufnahmeadapter 60 für ein kleineres Werkzeug 61 verwendet wird, so wird dieser in die Werkzeugaufnahme 18 eingesetzt und im vorliegenden Fall mittels der Spannbacken 20 der Frontspann-Einrichtung unter Betätigung des Pneumatikzylinders 26 in der Werkzeugaufnahme 18 festgespannt. In die Werkzeugaufnahme 18a des Spannadapters 60 wird das Werkzeug 61 eingesetzt, das im dargestellten Beispiel ein Spannelement 35 in Form eines Kopfes am Ende des Steilkegels aufweist, der nur durch einen kleinen Einstieg von diesem getrennt ist. Es ist zu erkennen, daß das in Fig. 3 dargestellte kleinere Werkzeug 61 so kurz ist, daß es nicht bis in den Bereich des ersten Spannmittelsatzes 48 reicht. Es wird jedoch mit seinem Spannelement 35 in den Spannadapter 65 hineingeschoben. Wenn jetzt bei Axialverschiebung des Spannkörpers 33 in Spannrichtung 76 die Spannmittel wirksam werden und in die Ringvertiefung 70 eingreifen, dann werden die Stege 69 des Spannadapters federnd zusammengedrückt und dieser gleichzeitig in Spannrichtung 38 gezogen. Die Spannbacken 68 kommen dann in Eingriff mit dem Spannelement 35 und spannen das Werkzeug 61 in der Werkzeugaufnahme 18a fest. Der Spannadapter wird also von den Spannmitteln 36 in gleicher Weise gefaßt wie sonst ein Spannelement eines Werkzeugs, und zwar in einer axialen Position, die der Axialposition des Spannelementes 35 des kleineren Werkzeugs plus der Länge des Spannadapters entspricht.

Beim Entspannen wird der Spannkörper 33 durch Druckluftzuleitung durch den Kanal 30 wieder entgegen der Spannrichtung in die in Fig. 1 dargestellte Lage zurückgeführt, kommt dabei von den Spannflächen frei und ist nun, jedoch entgegen der Kraft der Feder 40, wieder nach außen verschiebbar. Dies geschieht infolge der Schräge der Führungen 37 immer dann, wenn ein Spannmittel auf einen Widerstand stößt, sei es z.B. der Bund 71 (Fig. 4) oder schließlich die Stützfläche 43, die das Spannelement 36 endgültig in seine äußere entspannte Stellung zurückschiebt.

Beim Spanndapter 65 öffnen sich die Spannbacken 68 unter Eigenfederung der Stege 69, wenn die Spannmittel 36 diese freigeben. In Fig. 3 kann nun das Werkzeug 61 aus dem Aufnahmeadapter 60 und dieser aus der Werkzeugaufnahme 18 herausgenommen werden; ebenso wie das Werkzeug 61 in Fig. 4.

## Patentansprüche

1. Aufnahme- und Spannvorrichtung, insbesondere für Meßund Einstellgeräte (12) für Maschinenwerkzeuge, mit einer Werkzeugaufnahme (18) und an Spannelementen (35) eines Werkzeugs (61) angreifenden Universal-Spannmitteln (36), die von einem Antrieb (54) in axialer Richtung der Vorrichtung (11) bewegbar und während dieser Axialbewegung auch zur Ausführung einer Bewegung mit einer radialen Bewegungskomponente ausgebildet und geführt sind, dadurch gekennzeichnet, daß die Spannmittel (36) in einer sich unter einem Winkel in Spannrichtung (38) von der Werkzeugachse (17) entfernenden Führung (37) beweglich geführt sind, und zu ihrer Bewegung (77) mit Radialkomponente unabhängig von der Axialbewegung (76) angetrieben sowie in ihrer Führung (37) beim Spannvorgang selbstsperrend gehalten sind.

2. Vorrichtung nach Anspruch 1, dadurch gekennzeichnet, daß die Spannmittel (36) Angriffsflächen bzw. -Linien (46, 78) aufweisen, die beim Spannen an in Spannrichtung (38) ansteigenden Spannflächen (75) des Spannelementes (35) angreifen.

3. Vorrichtung nach Anspruch 1 oder 2, dadurch gekennzeichnet, daß der Antrieb der Spannmittel (36) durch Federkraft (40) erfolgt.

4. Vorrichtung nach einem der vorhergehenden Ansprüche, dadurch gekennzeichnet, daß der Winkel, unter dem die Spannmittel (36) in der Führung zur Achsrichtung bewegbar geführt sind, zwischen 30° und 60°, insbesondere 45°, beträgt.

5. Vorrichtung nach einem der vorhergehenden Ansprüche, dadurch gekennzeichnet, daß Angriffsflächen (46) der Spannmittel (36) im wesentlichen radial gerichtet sind.

6. Vorrichtung nach einem der vorhergehenden Ansprüche, dadurch gekennzeichnet, daß die Spannmittel Gleitflächen (45) aufweisen, die die Spannmittel (36) an nicht in Spannrichtung (38) ansteigenden Flächen des Werkzeuges (61) bzw. seines Spannelementes (35) entlanggleitend führen.

7. Vorrichtung nach einem der vorhergehenden Ansprüche, dadurch gekennzeichnet, daß die Spannmittel (36) in einem axial bewegbar geführten Spannkörper (33) geführt und in der entspannten Stellung (Fig. 1) an einer vorzugsweise radialen Stützfläche (43) abgestützt sind, die die Spannelemente (36) in der entspannten Stellung nach außen gedrückt hält und ggf. bei der Überführung in die entspannte Stellung nach außen bewegt.

8. Vorrichtung nach einem der vorhergehenden Ansprüche, dadurch gekennzeichnet, daß jeweils mehrere, vorzugsweise drei, einen Spannmittelsatz (48) bildende Spannmittel (36) in einer radialen Ebene angeordnet sind, wobei vorzugsweise mehrere Spannmittelsätze (48) in axialem Abstand voneinander angeordnet sind.

9. Vorrichtung nach einem der vorhergehenden Ansprüche, dadurch gekennzeichnet, daß die Spannmittel (36) in schrägen Bohrungen (37) eines Spannkörpers (33) geführte, vorzugsweise runde Bolzen sind, die an ihrem einen Ende Angriffs- und Gleitflächen (46, 45) in Form eines radialen, ggf. innen in Umfangsrichtung konkav gerundeten Vorsprunges (44) aufweisen und insbesondere eine mit einer radialen Stützfläche (43) am Vorrichtungskörper (13) zusammenarbeitende, zur Vorrichtung radiale Endfläche (42) enthalten.

10. Vorrichtung nach einem der Ansprüche 7 bis 9, dadurch gekennzeichnet, daß der Antrieb (54) des Spannkörpers (33) ein Pneumatikzylinder ist.

11. Vorrichtung nach einem der vorhergehenden Ansprüche, gekennzeichnet durch einen Spannadapter (65), an dem die Spannmittel (36), vorzugsweise im Bereich einer Ausnehmung (70) an seinem Umfang, angreifen und der in axialem Abstand davon Spannbacken (68) aufweist.

12. Vorrichtung nach Anspruch 11, dadurch gekennzeichnet, daß der Spannadapter (65) zum Eingreifen in einen Aufnahmedapter (60) ausgebildet ist, der in die Werkzeugaufnahme (18) einsetzbar ist.

13. Vorrichtung nach einem der vorhergehenden Ansprüche, dadurch gekennzeichnet, daß die Vorrichtung eine ggf. durch einen Drehantrieb drehbare Spindel ist.

14. Vorrichtung nach einem der vorhergehenden Ansprüche, dadurch gekennzeichnet, daß an der Vorrichtung (11) Spannbacken (20) für eine Frontspannung, eine Umfangsindexiervorrichtung (22) und/oder eine Bremse (23) vorgesehen sind, die mit dem gleichen Antriebsmedium wie die Spannmittel (36) betreibbar sind, wobei vorzugsweise ein Rotierübertrager (52) für die selektive Zuführung des Antriebsmediums zu drehbaren Vorrichtungsteilen vorgesehen ist.

## Claims

1. Holding and clamping device, particularly for measuring and adjusting mechanisms (12) for machine tools, having a tool mounting (18) and universal clamping means (36) acting on clamping elements (35) of a tool (61) and movable by a drive (54) in the axial direction of the device (11) and during said axial movement are also constructed and guided for performing a movement with a radial component of motion, characterized in that the clamping means (36) are movably guided in a guide (37) moving away under an angle in the clamping direction from the tool axis (17) and for its movement (77) with a radial component is driven independently of the axial movement (76) and held in self-locking manner in the guide (37) thereof during the clamping process.

2. Device according to claim 1, characterized in that the clamping means (36) have working surfaces or lines (46, 78), which during clamping act on clamping surfaces (75) of the clamping element (35) rising in the clamping direction (38).

3. Device according to claim 1 or 2, characterized in that the clamping means (36) are driven by spring tension (40).

4. Device according to one of the preceding claims, characterized in that the angle under which the clamping means (36) are movably guided in the axial direction in the guide is between 30 and 60°, particularly 45°.

5. Device according to one of the preceding claims, characterized in that the working surfaces (46) of the clamping means (36) are substantially radially directed.

6. Device according to one of the preceding claims, characterized in that the clamping means having sliding surfaces (45) guiding the clamping means (36) in sliding manner along surfaces of the tool (61) or its clamping element (35) not rising in the clamping direction (38).

7. Device according to one of the preceding claims, characterized in that the clamping means (36) are guided in an axially movably guided clamping body (33) and are supported in the unclamped position (fig. 1) on a preferably radial supporting surface (43), which keeps the clamping elements (36) pressed outwards in the unclamped position and optionally moves outwards on transfer into the unclamped position.

8. Device according to one of the preceding claims, characterized in that in each case several, preferably three, clamping means (36) forming a clamping means set (48) are arranged in a radial plane and preferably several clamping means sets (48) are arranged in axially spaced manner.

9. Device according to one of the preceding claims, characterized in that the clamping means (36) are preferably round bolts guided in sloping bores (37) of a clamping body (33) and having at one end working and sliding surfaces (46, 45) in the form of a radial projection (44), optionally inwardly concavely rounded in the circumferential direction, and in particular contain an end surface (42) radial to the device and cooperating with a radial supporting surface (43) on the device body (13).

10. Device according to one of the claims 7 to 9, characterized in that the drive (54) of the clamping body (33) is a pneumatic cylinder.

11. Device according to one of the preceding claims, characterized by a clamping adaptor (65) on which act the clamping means (36), preferably in the area of a recess (70) on its circumference, and which has clamping jaws (68) axially spaced therefrom.

12. Device according to claim 11, characterized in that the clamping adaptor (65) is constructed for engaging in a holding adaptor (60), which is insertable in the tool mounting (18).

13. Device according to one of the preceding claims, characterized in that the device is a spindle optionally rotatable by a rotary drive.

14. Device according to one of the preceding claims, characterized in that on the device (11) are provided clamping jaws (20) for a frontal tension, a circumferential indexing device (22) and/or a brake (23), which are operable with the same working medium as the clamping means (36) and preferably there is a rotary transferring means (52) for the selective supply of the driving medium to the rotary device parts.

## Revendications

1. Dispositif de fixation et serrage, notamment pour dispositifs de mesure et réglage (12) pour outils à machine, avec un logement d'outil (18) et avec des moyens de serrage universels (36) agissant sur des elements de serrage (35) d'un outil (61), étant mobiles par un entraînement (54) en direction axiale du dispositif (11) et durant ce mouvement axial étant configurés et guidés de façon à pouvoir de même exécuter un mouvement avec une composante radiale, caractérisé en ce que les moyens de serrage (36) sont guidés de façon mobile dans un guidage (37), qui s'eloigne sous un angle de l'axe (17) de l'outil en direction de serrage (38), et qui sont entraînés à leur mouvement (77), ayant composante radiale independamment du mouvement axial (76) et qui sont arrètés dans leur guidage (37) durant le processus de serrage de façon auto-indesserrable.

2. Dispositif selon la revendication 1, caractérisé en ce que les moyens de serrage (36) présentent des surfaces ou des lignes d'attaques (46, 78), lesquelles agissent durant le serrage sur les surfaces de serrage ou d'ablocage (75) de l'élément de serrage (35) croissantes en direction du serrage (38).

3. Dispositif selon la revendication 1 ou 2, caractérisé en ce que l'entraînement des moyens de serrage (36) est produit par force de ressort (40).

4. Dispositif selon une des revendications précédentes, caractérisé en ce que l'angle sous le quel les moyens de serrage (36) sont guidés mobilement le long de la direction de l'axe dans le guidage s'éleve entre 30° et 60°, notamment à 45°.

5. Dispositif selon une des revendications précédentes, caractérisé en ce que des surfaces d'attaques (46) des moyens de serrage (36) sont orientées essentiellement de façon radiale.

6. Dispositif selon une des revendications précédentes, caractérisé en ce que les moyens de serrage présentent des surfaces de glissement (45), lequelles guident en glissant les moyens de serrage (36) le long des surfaces de l'outil (61) ou de son element de serrage (35) non croissantes en direction de serrage (38).

7. Dispositif selon une des revendications précédentes, caractérisé en ce que les moyens de serrage (36) sont guidés dans un corps de serrage (33), qui est guidé axialement mobil, et qui sont appuyés en position desserré (fig. 1) à une face d'appui de préference radiale (43), laquelle garde pressés vers l'exterieur les éléments de serrage (36) en position détendue et eventuellement les meut vers l'exterierur durant le transport vers la position détendue.

8. Dispositif selon und des revendications précédentes, caractérisé en ce que respectivement plusieurs, de préference trois moyens de serrage (36), qui forment un ensemble de moyens de serrage (48), sont disposés dans un plan radial, étant de préference plusieurs ensembles de moyens de serrage (48) disposés avec un écart axial.

9. Dispositif selon une des revendications précédentes, caractérisé en ce que les moyens de serrage (36) sont des chevilles de préference rondes, guidées par des alésages obliques (37) d'un corps de serrage (33), lequelles chevilles ont au bout des surfaces d'attaque et de glissement (46, 45) en forme d'un ressaut radial (44), qui présente eventuellement à l'intérieur, en direction circonférencielle, une surface concave et qui ont notamment une surface terminale (42), radiale vers le dispositif, laquelle travaille ensemble ou interagitavec une surface d'appui radiale (43) au corps du dispositif (13).

10. Dispositif selon une des revendications 7 à 9, caractérisé en ce que l'entraînement (54) du corps de serrage (33) est un cylindre ou vérin pneumatique.

11. Dispositif selon une des revendications précédentes, caractérisé en ce qu'un adaptateur de serrage (65) sur le quel les moyens de serrage (36) agissent de préférence dans le domaine d'un creux (70) sur sa circonférence, présente en écart axial des mâchoires de serrage (68).

12. Dispositif selon la revendication 11, caractérisé en ce que l'adaptateur de serrage (65) est formé de façon à s' engager dans un adaptateur de captage (60), qui est insérable dans le capteur à outil (18).

13. Dispositif selon une des revendications précédentes, caractérisé en ce que le dispositif est une broche tournante eventuellement par un entraînement rotatif.

14. Dispositif selon une des revendications précédantes, caractérisé en ce qu'au dispositif (11) sont prévues des mâchoires de serrage (20) pour un serrage frontal, un dispositif d'indexage de circonference (22) et/ou un frein (23), qui sont opérable avec le même médium d'entraînement que pour les moyens de serrage (36), étant de préference prévu un transmetteur rotatif (52) pour l'amenage sélectif du médium d'entraînement au parties rotatives du dispositif.
